# EUROPÄISCHE PATENTANMELDUNG

(11) **EP 1 615 288 A2**
(43) Veröffentlichungstag der Anmeldung: **11.01.2006**
(21) Anmeldenummer: 05014413.8
(22) Anmeldetag: 02.07.2005
(51) Int. Cl.: H01M 10/42

(54) **Verfahren zur Prüfung der Dichtigkeit oder Stabilität galvanischer Elemente**

(30) Priorität: 07.07.2004 DE 102004033456
(71) Anmelder: VARTA Microbattery GmbH, 30419 Hannover (DE)
(72) Erfinder: Bosch, Ulrich, 86738 Deiningen (DE); Kohlberger, Markus, 73479 Ellwangen (DE); Röhberg, Jürgen, 73479 Ellwangen (DE); Maier, Johannes, 73479 Ellwangen (DE); Stelzig, Heinrich, 73494 Rosenberg (DE); Ilic, Dejan, 73494 Ellwangen (DE)
(74) Vertreter: Patentanwälte Ruff, Wilhelm, Beier, Dauster & Partner

(57) **Zusammenfassung**

Bei einem Verfahren zur Prüfung der Dichtigkeit und/oder der Stabilität galvanischer Elemente mit einem Foliengehäuse wird das Innere des galvanischen Elements mit einem Überdruck eines fluiden Mediums beaufschlagt. Dann wird das Auftreten undichter Stellen geprüft oder der Berstdruck des Foliengehäuses bestimmt. Dieses Verfahren ist insbesondere für Lithium-lonen-Zellen oder Lithium-Polymer-Zellen geeignet.

## Beschreibung

Die Erfindung betrifft ein Verfahren zur Prüfung der Dichtigkeit und/oder der Stabilität galvanischer Elemente mit einem Foliengehäuse, insbesondere ein Verfahren zur Prüfung der Dichtigkeit und/oder der Stabilität von Lithium-lonen-Zellen oder Lithium-Polymer-Zellen.

Mobilgeräte wie Organizer, Notebooks, Mobiltelefone (Handys) und dergleichen benötigen wiederaufladbare galvanische Elemente, an die immer höhere Anforderungen gestellt werden. So sollen möglichst hohe volumetrische und gravimetrische Energiedichten erzielt werden. Dies versucht man unter anderem dadurch zu erreichen, daß Größe und Gewicht der Gehäuse dieser galvanischen Elemente immer weiter reduziert werden. Dementsprechend verwendet man statt der früher üblichen schweren und stabilen Becher, die meist aus vernickeltem Edelstahl oder aus Alumnium bestehen, zunehmend Gehäuseteile, die aus Folien bestehen. Solche Foliengehäuse werden derzeit insbesondere bei den sogenannten Lithium-Ionen-Zellen oder Lithium-Polymer-Zellen eingesetzt.

Die für die Herstellung der Foliengehäuse eingesetzten Folien sind in der Regel aus Kunststoffen gefertigt. Diese Kunststoffolien sind häufig metalisiert, beispielsweise mit Kupfer- oder Aluminiumschichten, um auf diese Weise eine Gasundurchlässigkeit und eine elektrische Leitfähigkeit zu erreichen. Wird das Foliengehäuse gleichzeitig als Ableiter verwendet, so werden häufig zwei solche metallisierte Folienstücke mit Hilfe klebefähiger Kunststoffolien miteinander verklebt (z. B. bei der Lithium-lonen-Zelle oder Lithium-Flachzelle). Dient die Folie nur als Gehäuse ohne Ableitfunktion, so wird meist eine Kunststoff-Metall-Verbundfolie verwendet, also z. B. eine beidseitig kunststoffbeschichtete Aluminiumfolie. Derartige Verbundfolien finden bei den Lithium-Polymer-Zellen oder -Akkus Verwendung.

In allen genannten Fällen muß die Dichtigkeit, d. h. der gasdichte Abschluß des Inneren des galvanischen Elements gegenüber der Umgebung, gewährleistet sein. Dementsprechend muß beim Herstellungsverfahren des galvanischen Elements eine gasdichte Verklebung oder Verschweißung des Foliengehäuses, d. h. der das Gehäuse bildenden Folien untereinander und miteinander, erreicht werden. Als Folge davon ist es für den Hersteller von galvanischen Elementen erforderlich, ein Prüfverfahren zu besitzen, mit dem die Dichtigkeit und (mechanische) Stabilität eines Foliengehäuses getestet werden kann. Dabei soll dieses Prüfverfahren sowohl im Entwicklungsstadium von Foliengehäusen als auch in der Produktion solcher Foliengehäuse einsetzbar sein.

Eine Vielzahl bereits bekannter Prüfverfahren kommt für diese Anforderungen nicht in Betracht. So ist eine ganze Reihe von Prüfverfahren aufgrund der zu ihrer Durchführung notwendigen (Zwischen-)Lagerzeiten zu langwierig. Dies betrifft beispielsweise eine Dichtigkeitsprüfung durch Zurückwiegen eines galvanischen Elements nach einer definierten Lagerzeit bei erhöhter Temperatur. Andere Verfahren sind schlicht und einfach nicht praktikabel, insbesondere in der Fertigung, wie beispielsweise die Ermittlung von Löchern in einer tiefgezogenen Verbundfolie schon vor Einbringung in die Fertigung mittels Licht und Lichtsensor. Ähnliches gilt für die Methode, gasförmige flüchtige Elektrolytbestandteile mit einem Massenspektrometer nachzuweisen. Eine solche Methodik ist für eine normale Fertigung viel zu teuer, genauso wie eine Ermittlung von Löchern im Foliengehäuse über ein Bildverarbeitungssystem.

Desweiteren existieren nach Kenntnis der Anmelderin derzeit zwei Methoden, um eine Verklebung von Gehäuseteilen aus Kupferfolien zu überprüfen. Bei der einen Methode handelt es sich um die sogenannte Tropenfeuchtelagerung. Hier werden galvanische Elemente bei 45 °C und einer relativen Luftfeuchte von 90 % gelagert und anhand der elektrischen Zustandswerte (Impedanz und Spannung) überprüft, ob Feuchtigkeit durch die miteinander verklebten Folien diffundiert oder ob es unverklebte Bereiche gibt. Auch hier ist eine Lagerung über mindestens mehrere Tage erforderlich, um definitive Aussagen machen zu können.

Bei der anderen Methode wird in einem Zugversuch mittels einer Zugprüfmaschine die Festigkeit der Klebeverbindung überprüft. Hier kann allerdings nur die Gesamtstabilität bzw. Gesamtfestigkeit des Folienverbunds geprüft werden. Eine Aussage, ob und wo einzelne Bereiche nicht oder nur schlecht miteinander verbunden waren, läßt sich nicht treffen.

Dementsprechend stellt sich die Erfindung die Aufgabe, die eingangs genannten Anforderungen zu erfüllen, ohne die Nachteile des Standes der Technik in Kauf nehmen zu müssen. Insbesondere soll ein vergleichsweise einfaches Verfahren zur Verfügung gestellt werden, das sich sowohl in der Entwicklung als auch in der Fertigung einsetzen läßt.

Dabei soll die Dichtigkeit/Stabilität des Foliengehäuses innerhalb vergleichsweise kurzer Zeit getestet werden können.

Diese Aufgabe wird gelöst durch das Verfahren mit den Merkmalen des Anspruchs 1. Bevorzugte Ausführungsformen dieses Verfahrens sind in den abhängigen Ansprüchen 2 bis 12 dargestellt. Der Wortlaut sämtlicher Ansprüche wird hiermit durch Bezugnahme zum Inhalt dieser Beschreibung gemacht.

Bei dem Verfahren der eingangs genannten Art wird erfindungsgemäß ein fluides Medium mit einem Überdruck in das Innere des galvanischen Elements eingebracht, d. h. das Innere des galvanischen Elements wird mit dem Überdruck eines fluiden Mediums beauftragt. Vorzugsweise kann diese Druckbeaufschlagung kontinuierlich oder schrittweise erfolgen, um auf diese Weise bestimmte Werte des Überdrucks einzustellen und das Verhalten des Foliengehäuses bei diesen verschiedenen Überdruckwerten zu beobachten.

Bei einer ersten bevorzugten Ausführungsform des erfindungsgemäßen Verfahrens wird das Foliengehäuse des galvanischen Elements bei oder nach der Druckbeaufschlagung, d. h. bei oder nach Erreichen des gewählten Überdrucks, auf undichte Stellen geprüft. Vorzugsweise wird dabei die Lage gegebenenfalls vorhandener undichter Stellen bestimmt, um diese Information zusätzlich in den Entwicklungs- oder Fertigungsprozeß einfließen zu lassen. Gegebenenfalls kann Zahl und/oder Lage der undichten Stellen in Abhängigkeit zu verschiedenen Überdruckwerten gesetzt werden.

Bei einer zweiten bevorzugten Ausführungsform des erfindungsgemäßen Verfahrens wird der Berstdruck, d. h. der Druck, bei dem das Foliengehäuse im wesentlichen vollständig aufreißt oder platzt, bestimmt. Auch auf diese Weise lassen sich Informationen über die Qualität einer Verklebung der für das Gehäuse verwendeten Folien und damit für den Entwicklungs- und Fertigungsprozeß gewinnen.

Erfindungsgemäß lassen sich die unterschiedlichsten fluiden Medien einsetzen. Bekanntlich handelt es sich hierbei um Medien mit einer nennenswerten Fließfähigkeit, die leicht einen Druck/Überdruck aufbauen können.
Dabei ist es bei der Erfindung bevorzugt, wenn es sich bei dem fluiden Medium um eine Flüssigkeit handelt. Solche fluiden Medien sind insbesondere Öle, vorzugsweise niedrigviskose Öle.
Eine andere Gruppe bevorzugt verwendbarer fluider Medien sind Gase, wobei hier insbesondere Luft, vorzugsweise Preßluft oder Druckluft, zu nennen sind.
Schließlich ist noch die Möglichkeit hervorzuheben, daß bei der Erfindung ein Aerosol als fluides Medium eingesetzt wird. Bei einem solchen Aerosol kann es sich beispielsweise um ein, vorzugsweise niedrigviskoses, Öl in Luft, insbesondere Preßluft, handeln.

Die Überdrucke, mit denen das Innere des galvanischen Elements mit dem fluiden Medium beaufschlagt wird, sind grundsätzlich bei der Erfindung frei wählbar. Zweckmäßig sind Überdrucke zwischen 1,5 und 10 bar (absolut), vorzugsweise zwischen 3 und 8 bar (absolut). Innerhalb des zuletzt genannten Bereichs sind Überdrucke zwischen 4 und 6,5 bar (absolut) weiter hervorzuheben.

In Weiterbildung ist es bei dem erfindungsgemäßen Verfahren bevorzugt, wenn das fluide Medium mit einem Mittel versehen ist, das die optische Erkennbarkeit des Mediums für einen Beobachter erleichtert. Insbesondere handelt es sich hier um Farbstoffe, die beispielsweise einem Öl, insbesondere einem niedrigviskosen Öl, zugesetzt werden. Auf diese Weise können undichte Stellen und Austrittsstellen im Foliengehäuse leichter erkannt werden.

Das fluide Medium wird insbesondere über eine (kleine) Öffnung, die in das Foliengehäuse eingebracht wird, in das Innere des galvanischen Elements eingebracht. Die Öffnung kann dabei beispielsweise durch ein einfaches Einstechen in das Foliengehäuse hergestellt werden. Dies wird später noch näher erläutert.

Um zu gewährleisten, daß während der Durchführung des Verfahrens ein Experimentator nicht gefährdet wird, wird das Verfahren vorzugsweise in einer gegenüber der Umgebung abgeschlossenen Einrichtung, d. h. einer sogenannten Sicherheitseinrichtung, durchgeführt. Hierbei kann es sich vorzugsweise um einen Kasten oder ein anderes geeignetes Behältnis mit ausreichend stabilen Wänden handeln. Vorzugsweise ist mindestens eine dieser Wände durchsichtig, um auf diese Weise die Durchführung des Verfahrens kontrollieren zu können.

Die beschriebenen und weitere Merkmale der Erfindung ergeben sich aus der nachfolgenden Beschreibung von zwei Beispielen in Verbindung mit der Zeichnung und den Unteransprüchen. Dabei können die einzelnen Merkmale jeweils für sich allein oder in Kombination miteinander verwirklicht sein.

### In der Zeichnung zeigt

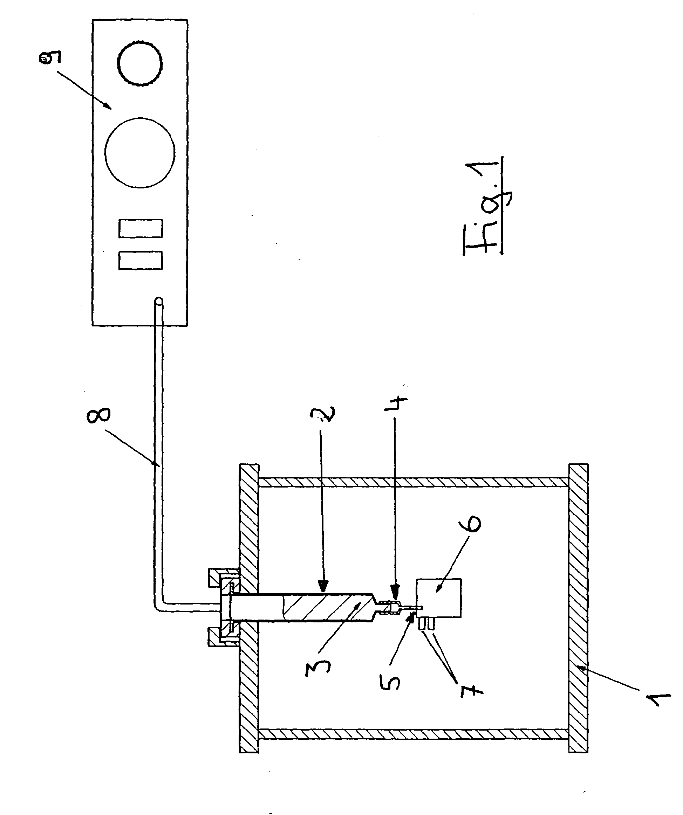

- Fig. 1: die schematische Ansicht einer Vorrichtung, mit der das erfindungsgemäße Verfahren durchgeführt werden kann.

Fig. 1 zeigt in schematischer Ansicht zunächst einen Sicherheitsbehälter 1, der für ein Arbeiten unter Überdruck, beispielsweise bis zu 10 bar, ausgelegt ist. In diesen Sicherheitsbehälter 1 ragt eine spritzenartige Einrichtung 2, die mit einem fluiden Medium 3, beispielsweise einem niedrigviskosen Öl, oder Preßluft/Druckluft befüllbar ist. An ihrem unteren Ende ist die Einrichtung 2 mit einer Kanüle 4 verbunden, die über eine Einstichöffnung 5 in das Innere eines galvanischen Elements 6, das in geeigneter Weise im Sicherheitsbehälter 1 befestigt oder gehalten ist, eingeführt ist. Zur besseren Erkennbarkeit sind am galvanischen Element 6 dessen Ableitelemente 7 dargestellt.

An ihrem der Kanüle 4 abgewandten Ende ist die spritzenartige Einrichtung 2 mit einem Druckschlauch 8 verbunden, der seinerseits an seinem der Einrichtung 2 abgewandten Ende mit einem Gerät 9 zur Dosierung und Druckbeaufschlagung des fluiden Mediums verbunden ist. Bei diesem Gerät 9 kann es sich beispielsweise um ein Dosiergerät vom Typ 900 der Firma GLT, Pforzheim, Deutschland, handeln. Dieses Gerät ist für einen Druckbereich zwischen 0 und 6,5 bar ausgelegt.

### Beispiel 1

Unter Verwendung der in Fig. 1 dargestellten Vorrichtung wird zur Prüfung der Dichtigkeit/Stabilität einer Lithium-Polymer-Zelle wie folgt vorgegangen.

Zunächst wird die Zelle 6 mit einer Kanüle 4 angestochen und diese in der Einstichöffnung 5 mit einem sogenannten Sekundenkleber oder einem sogenannten hot melt-Kleber verschlossen.
Dann wird die im Sicherheitsgehäuse 1 angebrachte Spritze 2, beispielsweise mit Hilfe einer anderen Spritze, mit einem niedrigviskosen Öl, das mit einem Farbstoff versehen ist, befüllt.
Anschließend wird der Druckschlauch 8 über den entsprechenden Anschluß an der Spritze 2 befestigt. Dann wird der Schlauch 8 mit Hilfe einer Klammer an einer Stelle abgedrückt und der Verschluß der Spritze 2 entfernt.

Schließlich wird zur abschließenden Vorbereitung die Kanüle 5 auf die Spritze 2 gesteckt, das Sicherheitsgehäuse 1 verschlossen und die Klammer am Druckschlauch 8 geöffnet.

Nun wird zur eigentlichen Durchführung des erfindungsgemäßen Verfahrens das Öl schrittweise in die Zelle 6 gepumpt, wobei der Druck/Überdruck im vorliegenden Fall von einem Ausgangswert von 3 bar in Schritten von jeweils 0,5 bar auf einen Maximaldruck von 6,5 bar erhöht wird. Jeder Druckwert wird über einen bestimmten Zeitraum gehalten, um die Zelle 6 und deren Dichtigkeit prüfen und beobachten zu können.

Verwendet man verschiedene Folienverbunde und geht gemäß Beispiel 1 vor, so ergeben sich die folgenden Erfahrungswerte für das Auftreten von undichten Stellen oder ein Bersten, die in eine Entwicklung oder Fertigung eingebracht werden können:
- Mittelwert von 4,2 bar (bei einer Standardabweichung von 0,2) schlechte Haftung des Folienverbunds
- Mittelwert 6,5 bar (bei einer Standardabweichung von 0,25) gute Haftung des Folienverbunds
- Mittelwert 5,8 bar (bei einer Standardabweichung von 0,3) teilweise nicht ausreichender Folienverbund

### Beispiel 2

Bei diesem Beispiel wird ebenfalls mit der Vorrichtung gemäß Fig. 1 gearbeitet, jedoch anstelle des niedrigviskosen Öls Druckluft/Preßluft als fluides Medium verwendet.

Bei dieser Vorgehensweise wird die Zelle 6 ebenfalls mit der Kanüle 5 angestochen und diese in der Einstichstelle mit Sekundenkleber oder hot melt-Kleber fixiert.

Dann wird der Druckschlauch 8 über einen entsprechenden Anschluß an der Spritze 2 befestigt, die Kanüle 5 auf die Spritze 2 gesteckt und das Sicherheitsgehäuse 1 verschlossen. Dann wird in gleicher Weise wie in Beispiel 1 das erfindungsgemäße Verfahren durchgeführt.

## Patentansprüche

1. Verfahren zur Prüfung der Dichtigkeit und/oder der Stabilität galvanischer Elemente mit einem Foliengehäuse, insbesondere zur Prüfung der Dichtigkeit und/oder der Stabilität von Lithium-lonen-Zellen oder Lithium-Polymer-Zellen, **dadurch gekennzeichnet, daß** das Innere des galvanischen Elements mit einem Überdruck eines fluiden Mediums beaufschlagt wird.

2. Verfahren nach Anspruch 1, **dadurch gekennzeichnet, daß** das Foliengehäuse nach der Beaufschlagung mit dem Überdruck auf undichte Stellen geprüft wird, wobei vorzugsweise auch die Lage der undichten Stellen bestimmt wird.

3. Verfahren nach Anspruch 1 oder Anspruch 2, **dadurch gekennzeichnet, daß** der Berstdruck des Foliengehäuses bestimmt wird.

4. Verfahren nach einem der vorhergehenden Ansprüche, **dadurch gekennzeichnet, daß** es sich bei dem fluiden Medium um eine Flüssigkeit handelt.

5. Verfahren nach einem der vorhergehenden Ansprüche, insbesondere nach Anspruch 4, **dadurch gekennzeichnet, daß** es sich bei dem fluiden Medium um ein Öl, vorzugsweise um ein niedrigviskoses Öl, handelt.

6. Verfahren nach einem der Ansprüche 1 bis 3, **dadurch gekennzeichnet, daß** es sich bei dem fluiden Medium um ein Gas handelt.

7. Verfahren nach Anspruch 6, **dadurch gekennzeichnet, daß** es sich bei dem Gas um Luft, insbesondere um Preßluft, handelt.

8. Verfahren nach einem der vorhergehenden Ansprüche, **dadurch gekennzeichnet, daß** es sich bei dem fluiden Medium um ein Aerosol, vorzugsweise um ein Öl-Luft-Aerosol, handelt.

9. Verfahren nach einem der vorhergehenden Ansprüche, **dadurch gekennzeichnet, daß** das Innere des galvanischen Elements mit einem Überdruck zwischen 1,5 und 10 bar (absolut), vorzugsweise zwischen 3 und 8 bar (absolut), insbesondere zwischen 4 und 6,5 bar (absolut), beaufschlagt wird.

10. Verfahren nach einem der vorhergehenden Ansprüche, **dadurch gekennzeichnet, daß** das fluide Medium mindestens ein Mittel zu dessen optischer Erkennung, vorzugsweise mindestens einen Farbstoff, enthält.

11. Verfahren nach einem der vorhergehenden Ansprüche, **dadurch gekennzeichnet, daß** das fluide Medium durch eine in das Foliengehäuse eingebrachte, vorzugsweise kleine Öffnung in das Innere des galvanischen Elements eingebracht wird.

12. Verfahren nach einem der vorhergehenden Ansprüche, **dadurch gekennzeichnet, daß** es in einer gegenüber der Umgebung abgeschlossenen Einrichtung, insbesondere in einem sogenannten Sicherheitsbehälter, durchgeführt wird.
